(19) Europäisches Patentamt
European Patent Office
Office européen des brevets

(11) **EP 3 312 215 A1**

(12) **EUROPEAN PATENT APPLICATION**
published in accordance with Art. 153(4) EPC

(43) Date of publication:
**25.04.2018 Bulletin 2018/17**

(51) Int Cl.:
***C08G 69/26*** (2006.01)

(21) Application number: **16814043.2**

(22) Date of filing: **27.04.2016**

(86) International application number:
**PCT/JP2016/063270**

(87) International publication number:
**WO 2016/208272 (29.12.2016 Gazette 2016/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.06.2015 JP 2015124444**

(71) Applicant: **Mitsubishi Gas Chemical Company,
Inc.
Chiyoda-ku,
Tokyo 100-8324 (JP)**

(72) Inventors:
• **TSUNAKA, Nobuhide
Hiratsuka-shi
Kanagawa 254-0016 (JP)**

• **KATO, Tomonori
Hiratsuka-shi
Kanagawa 254-0016 (JP)**
• **OGURO, Hatsuki
Hiratsuka-shi
Kanagawa 254-0016 (JP)**
• **CHIBA, Tomo
Hiratsuka-shi
Kanagawa 254-0016 (JP)**
• **KOBAYASHI, Masayuki
Hiratsuka-shi
Kanagawa 254-0016 (JP)**

(74) Representative: **Vossius & Partner
Patentanwälte Rechtsanwälte mbB
Siebertstrasse 3
81675 München (DE)**

(54) **POLYAMIDE RESIN AND MOLDED ARTICLE**

(57) Provided is a polyamide resin with high transparency and high heat aging resistance. The polyamide resin contains a diamine-derived structural unit and a dicarboxylic acid-derived structural unit, the diamine-derived structural unit being such that 70 mol% or more thereof is derived from 1, 3-bis (aminomethyl) cyclohexane, and the dicarboxylic acid-derived structural unit being such that 10 to 90 mol% thereof is derived from isophthalic acid, 90 to 10 mol% of thereof is derived from a straight chain aliphatic dicarboxylic acid having 8 to 12 carbon atoms, and the dicarboxylic acid-derived structural unit containing substantially no terephthalic acid-derived structural unit.

**Description**

TECHNICAL FIELD

This invention relates to a novel polyamide resin and a molded article, in particular to a polyamide resin with high transparency and heat aging resistance, and a molded article using the same.

BACKGROUND ART

Polyamide resin, obtained by polycondensing bis (aminomethyl) cyclohexane and dicarboxylic acid, has been examined.

For example, Patent Literature 1 discloses a heat resistant polyamide resin composed of a diamine component that contains 40 mol% or more of bis(aminomethyl)cyclohexane, and a dicarboxylic acid component that contains 50 mol% or more of isophthalic acid and/or terephthalic acid. Patent Literature 1 describes in its EXAMPLES a polyamide resin that is a polycondensate of 1,3-bis(aminomethyl)cyclohexane and isophthalic acid and terephthalic acid.

Patent Literature 2 describes a polyamide resin composition obtained by blending 100 parts by mass of mixed resin (C) with 10 to 150 parts by mass of an inorganic filler; wherein the mixed resin (C) contains 70 to 100% by mass of polyamide resin (A), and 30 to 0% by mass of a thermoplastic resin (B) other than the polyamide resin (A) (100% by mass in total); and the resin (A) is obtained by polycondensing a diamine that contains, in the diamine component thereof, 70 mol% or more of a mixture of 60 to 100 mol% of *cis*-1,3-bis(aminomethyl)cyclohexane and 40 to 0 mol% of *trans*-1,3-bis (aminomethyl) cyclohexane (100 mol% in total), and a dicarboxylic acid that contains, in the dicarboxylic acid component thereof, 70 mol% or more of a straight chain aliphatic $\alpha,\omega$-dicarboxylic acid having 4 to 20 carbon atoms. Patent Literature 2 describes in its EXAMPLES a polyamide resin that is a polycondensate of 1,3-bis(aminomethyl)cyclohexane and adipic acid.

CITATION LIST

PATENT LITERATURE

[Patent Literature 1] JP-A-2010-285553
[Patent Literature 2] JP-A-2001-115017

SUMMARY OF THE INVENTION

TECHNICAL PROBLEM

Under such situation, the present inventors found that the polyamide resin described in Patent Literature 1 and the polyamide resin described in Patent Literature 2 were inferior in at least one of transparency or heat aging resistance.
This invention is aimed to solve the problem, and is to provide a polyamide resin with high transparency and high heat aging resistance.

SOLUTION TO PROBLEM

Considering the situation, the present inventors conducted thorough examinations, and found that the problem may be solved by means <1>, and preferably by means <2> to <9> below.

<1> A polyamide resin comprising a diamine-derived structural unit and a dicarboxylic acid-derived structural unit, the diamine-derived structural unit being such that 70 mol% or more thereof is derived from 1,3-bis(aminomethyl)cyclohexane, and the dicarboxylic acid-derived structural unit being such that 10 to 90 mol% thereof is derived from isophthalic acid, 90 to 10 mol% of thereof is derived from a straight chain aliphatic dicarboxylic acid having 8 to 12 carbon atoms, and the dicarboxylic acid-derived structural unit containing substantially no terephthalic acid-derived structural unit.
<2> The polyamide resin of <1>, wherein the dicarboxylic acid-derived structural unit is such that 30 to 70 mol% thereof is derived from isophthalic acid, and 70 to 30 mol% thereof is derived from the straight chain aliphatic dicarboxylic acid having 8 to 12 carbon atoms.
<3> The polyamide resin of <1> or <2>, wherein the straight chain aliphatic dicarboxylic acid having 8 to 12 carbon atoms is sebacic acid.

<4> The polyamide resin of any one of <1> to <3>, wherein the polyamide resin has a melt viscosity, measured at a shear rate of 122 sec$^{-1}$, 280°C, and a retention time of 6 minutes, of 200 to 1,200 Pa·s.

<5> The polyamide resin of any one of <1> to <4>, wherein the polyamide resin has a number-average molecular weight of 8,000 to 25,000.

<6> The polyamide resin of any one of <1> to <5>, wherein the polyamide resin has a glass transition temperature of 100 to 190°C.

<7> The polyamide resin of any one of <1> to <6>, wherein 1,3-bis(aminomethyl)cyclohexane that composes the diamine-derived structural unit has a molar ratio of *cis* isomer and *trans* isomer (*cis/trans*) of 100/0 to 50/50.

<8> The polyamide resin of any one of <1> to <7>, being amorphous.

<9> A molded article obtained by molding the polyamide resin described in any one of <1> to <8>.

ADVANTAGEOUS EFFECTS OF INVENTION

According to this invention, it now became possible to provide a polyamide resin with high transparency and high heat aging resistance.

DESCRIPTION OF EMBODIMENTS

This invention will be detailed below. In this specification, all numerical ranges given using "to", placed between numerals, mean the ranges containing both numerals as the lower and upper limit values .

The polyamide resin of this invention characteristically includes a diamine-derived structural unit and a dicarboxylic acid-derived structural unit, wherein the diamine-derived structural unit is such that 70 mol% or more thereof is derived from 1,3-bis(aminomethyl)cyclohexane, and the dicarboxylic acid-derived structural unit is such that 10 to 90 mol% thereof is derived from isophthalic acid, 90 to 10 mol% thereof is derived from a straight chain aliphatic dicarboxylic acid having 8 to 12 carbon atoms, and the dicarboxylic acid-derived structural unit contains substantially no terephthalic acid-derived structural unit. With such configuration, the obtainable polyamide resin will have high transmissivity and high heat aging resistance. The polyamide resin also will have low melt viscosity, and high glass transition temperature (Tg).

In this invention, 70 mol% or more of the diamine-derived structural unit is derived from 1,3-bis(aminomethyl)cyclohexane. Preferably 80 mol% or more, more preferably 90 mol% or more, particularly 95 mol% or more, even more preferably mol% or more, and yet more preferably 99 mol% or more of the diamine-derived structural unit is derived from 1,3-bis(aminomethyl)cyclohexane.

Diamines other than 1,3-bis(aminomethyl)cyclohexane are exemplified by aliphatic diamines such as 1,4-bis(aminomethyl)cyclohexane, tetramethylenediamine, pentamethylenediamine, hexamethylenediamine, octamethylenediamine, and nonamethylenediamine; and aromatic diamines such as paraphenylenediamine, metaxylylenediamine, and paraxylylenediamine. Only one of these diamines may be used independently, or two or more species may be used in combination.

1,3-Bis(aminomethyl)cyclohexane, which is a source diamine of the polyamide resin include cis isomer and *trans* isomer. In this invention, molar ratio of the isomers (*cis/trans*) is preferably 100/0 to 50/50, more preferably 90/10 to 60/40, and even more preferably 80/20 to 70/30.

In this invention, 10 to 90 mol% of the dicarboxylic acid-derived structural unit is derived from isophthalic acid, and 90 to 10 mol% thereof is derived from a straight chain aliphatic dicarboxylic acid having 8 to 12 carbon atoms, but the dicarboxylic acid-derived structural unit contains substantially no terephthalic acid-derived structural unit.

Now the phase "... contains substantially no terephthalic acid-derived structural unit" means typically that, out of all dicarboxylic acids that compose the dicarboxylic acid-derived structural unit, terephthalic acid accounts for 10 mol% or less, preferably 5 mol% or less, more preferably 3 mol% or less, and even more preferably 1 mol% or less. The lower limit thereof may even be 0 mol%.

The lower limit of the content of isophthalic acid, out of all dicarboxylic acids that compose the dicarboxylic acid-derived structural unit, is preferably 20 mol% or more, more preferably 30 mol% or more, eve more preferably 40 mol% or more, yet more preferably 50 mol% or more, and even may be 51 mol% or more. The upper limit value of the content of isophthalic acid is preferably 80 mol% or less, more preferably 75 mol% or less, even more preferably 70 mol% or less, yet more preferably 68 mol% or less, and furthermore preferably 65 mol% or less. Within these ranges, the polyamide resin will more likely have a further improved transparency.

The lower limit of the content of the straight chain aliphatic dicarboxylic acid having 8 to 12 carbon atoms, out of all dicarboxylic acids that compose the dicarboxylic acid-derived structural unit, is preferably 20 mol% or more, more preferably 25 mol% or more, even more preferably 30 mol% or more, yet more preferably 32 mol% or more, and furthermore preferably 35 mol% or more. The upper limit of the content of the straight chain aliphatic dicarboxylic acid having 8 to 12 carbon atoms is preferably 80 mol% or less, more preferably 70 mol% or less, even more preferably 60 mol% or less, yet more preferably 50 mol% or less, and even may be 49 mol% or less.

The straight chain aliphatic dicarboxylic acid having 8 to 12 carbon atoms is preferably a straight chain aliphatic $\alpha,\omega$-dicarboxylic acid having 8 to 12 carbon atoms, more preferably suberic acid, azelaic acid, sebacic acid, 1,9-nonanedicarboxylic acid, and 1,10-decanedicarboxylic acid. Sebacic acid is particularly preferable. Only one of these straight chain aliphatic dicarboxylic acids having 8 to 12 carbon atoms may be used independently, or two or more species may be used in combination. Within these ranges, the polyamide resin tends to have a more improved heat aging resistance.

Ratio of the total contents of isophthalic acid and the straight chain aliphatic dicarboxylic acid having 8 to 12 carbon atoms, out of all dicarboxylic acids that compose the dicarboxylic acid-derived structural unit, is preferably 90 mol% or more, more preferably 95 mol% or more, even more preferably 98 mol% or more, and even may be 100 mol%. With such ratio, the polyamide resin will more likely have further improved transparency and heat aging resistance.

Dicarboxylic acids other than isophthalic acid and the straight chain aliphatic dicarboxylic acid having 8 to 12 carbon atoms are exemplified by aliphatic dicarboxylic acids having 7 or less carbon atoms, and alicyclic dicarboxylic acids having 6 to 12 carbon atoms. Specific examples thereof include succinic acid, glutaric acid, adipic acid, 1,4-cyclohexanedicarboxylic acid, and 1,3-cyclohexanedicarboxylic acid.

One preferred embodiment of the dicarboxylic acid-derived structural unit in this invention is such that 30 to 70 mol% thereof is derived from isophthalic acid, and 70 to 30 mol% thereof is derived from the straight chain aliphatic dicarboxylic acid having 8 to 12 carbon atoms. In this embodiment, other dicarboxylic acid-derived structural unit preferably accounts for 0 to 3 mol%. More preferable ranges in this embodiment are same as the preferred ranges described above.

The polyamide resin of this invention contains the dicarboxylic acid-derived structural unit and the diamine-derived structural unit, and may also contain structural units other than the dicarboxylic acid-derived structural unit and the diamine-derived structural unit, and other moieties such as terminal group. Such other structural units are exemplified, but not limitatively, by lactams such as $\epsilon$-caprolactam, valerolactam, laurolactam and undecalactam; and structural units derived from aminocarboxylic acids such as 11-aminoundecanoic acid and 12-aminododecanoic acid. The polyamide resin of this invention would also contain a trace component attributable to additive and so forth used for the synthesis. In this invention, the dicarboxylic acid-derived structural unit or the diamine-derived structural unit preferably accounts for 95% by mass or more, and more preferably 98% by mass or more, of the polyamide resin.

The polyamide resin of this invention is manufactured by melt polycondensation (melt polymerization), by adding a phosphorus-containing compound. The melt polycondensation is preferably a method by which a source diamine is added dropwise to a molten source dicarboxylic acid under pressurizing and heating, and the mixture is allowed to polymerize while removing the released water resulted from condensation; and a method by which a salt, composed of a source diamine and a source dicarboxylic acid, is heated under pressure in the presence of water, and the mixture is allowed to polymerize while removing the added water and released water resulted from condensation.

The phosphorus-containing compound that may be added to the polycondensation system of the polyamide resin of this invention is exemplified by dimethylphosphinic acid, phenyl methylphosphinic acid, hypophosphoric acid, sodium hypophosphite, potassium hypophosphite, lithium hypophosphite, calcium hypophosphite, ethyl hypophosphite, phenylphosphonous acid, sodium phenylphosphonite, potassium phenylphosphonite, lithium phenylphosphonite, ethyl phenylphosphonite, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, and pyrophosphorous acid. In particular, metal hypophosphites such as sodium hypophosphite, potassium hypophosphite, lithium hypophosphite, and calcium hypophosphite are preferably used, and calcium hypophosphite is particularly preferable since they can effectively promote the amidation reaction, and can effectively prevent coloration. The phosphorus-containing compound employable in this invention are, however, not limited thereto.

The polyamide resin of this invention obtained by melt polycondensation is preferably taken out once, pelletized, and dried for later use.

The polyamide resin of this invention has a melt viscosity, measured at a shear rate of 122 sec$^{-1}$, 280°C, and a retention time of 6 minutes, of 200 to 1,200 Pa·s, more preferably 300 to 1,000 Pa·s, even may be 400 to 900 Pa·s, and particularly may be 400 to 700 Pa·s. Even with such low melt viscosity, the polyamide resin of this invention may effectively be suppressed from producing a burr in the molded article.

The melt viscosity will be measured according to a method described later in EXAMPLES. If the measuring instruments described in EXAMPLES are no more available or difficult to obtain, due to discontinuance or other reasons, any equivalent instruments may be used. The same will also apply to all other methods for measurement described below.

The polyamide resin of this invention preferably has a number-average molecular weight of 8,000 to 25,000, more preferably 10,000 to 20,000, and even may be 12,000 to 19,000. The number-average molecular weight will be measured according to a method described later in EXAMPLES.

The polyamide resin of this invention preferably has a glass transition temperature of 100 to 190°C, and more preferably 120 to 170°C. In this invention, the polyamide resin can have such high Tg, and this beneficially makes the resin less likely to degrade the performance even under high temperature conditions. The glass transition temperature will be measured according to a method described later in EXAMPLES.

The polyamide resin of this invention may be an amorphous polyamide resin. Now the "amorphous polyamide resin" is a resin that shows no distinct melting point, typically showing a crystal melting enthalpy of ∆Hm of smaller than 5 J/g.

The polyamide resin of this invention, when molded into a 2 mm-thick article, preferably shows a haze of 4.5% or less, more preferably 4.0% or less, even more preferably 3.5% or less, even may be 3.0% or less, and further may be 2.5% or less. Although the lower limit of haze is preferably 0%, a level of 0.001% or more is practically acceptable. The haze in this invention will be measured according to a method described later in EXAMPLES.

The polyamide resin of this invention has high mechanical strength.

The polyamide resin of this invention, when measured in accordance with ISO178, preferably has a flexural modulus of 2.0 GPa or more, more preferably 2.2 GPa or more, and particularly 2.5 GPa or more. The upper limit value may typically, but not limitatively, be 5.0 GPa or less.

The polyamide resin of this invention, when measured in accordance with ISO178, preferably has a bending strength of 80 MPa or more, more preferably 100 MPa or more, and particularly 120 MPa or more. The upper limit value may typically, but not limitatively, be 300 MPa or less.

The polyamide resin of this invention may be used in the form of molded article obtained by molding a composition that contains the polyamide resin. The composition may solely be composed of one or more species of the polyamide resins of this invention, or may contain any of other ingredients.

Examples of such other ingredients that are optionally employable include polyamide resins other than the polyamide resin of this invention, thermoplastic resins other than polyamide resin, filler, matting agent, heat stabilizer, weathering stabilizer, UV absorber, plasticizer, flame retarder, antistatic agent, coloring inhibitor, and antigelling agent. Only one of these additives may be used independently, or two or more of them may be used in combination.

Examples of such other polyamide resins include polyamide 6, polyamide 66, polyamide 46, polyamide 6/66 (copolymer composed of a polyamide 6 component and a polyamide 66 component), polyamide 610, polyamide 612, polyamide 11, and polyamide 12. Only one of these polyamide resins may be used independently, or two or more of them may be used in combination.

Examples of the thermoplastic resins other than polyamide resin include polyester resins such as polyethylene terephthalate, polybutylene terephthalate, polyethylene naphthalate, and polybutylene naphthalate. Only one of these thermoplastic resins other than polyamide resin may be used independently, or two or more of them may be used in combination.

The molded article obtained by molding a composition that contains the polyamide resin may be used in various forms including film, sheet, thin molded article, and hollow molded article. The molded article is applicable to automobile and other transport equipment parts, general machinery parts, precision equipment parts, electronic/electric equipment parts, office automation equipment parts, building material/housing equipment parts, medical device, leisure time/sport goods, playing tools, medical supplies, daily goods including food wrapping film, and defense/aerospace products.

EXAMPLES

This invention will further be detailed below, referring to Examples. All materials, amounts of consumption, ratios, process details and procedures may suitably be modified, without departing from the spirit of this invention. The scope of this invention is therefore not limited to the specific Examples below.

Example 1

<Synthesis of 1,3-BAC10I-1>

Into a 50-L high pressure reactor equipped with a stirrer, a partial condenser, a total condenser, a pressure regulator, a thermometer, a drip tank, an aspirator, a nitrogen gas feeding pipe, a bottom outlet valve, and a strand die, placed were precisely weighed 7,000 g (34.61 mol) of sebacic acid (from Itoh Chemicals Co., Ltd.), 5,750 g (34.61 mol) of isophthalic acid (from A.G. International Chemical Co., Inc.), 3.3 g (0.019 mol) of calcium hypophosphite (from Kanto Chemical Co., Inc.), and 1.4 g (0.018 mol) of sodium acetate (from Kanto Chemical Co., Inc.). The reactor was thoroughly replaced with nitrogen gas, tightly closed, and the content was then heated up to 200°C under stirring while keeping inside of the reactor at 0.4 MPa. After reaching 200°C, dropwise addition of 9,847 g (69.22 mol) of 1,3-bis(aminomethyl)cyclohexane (1,3-BAC, molar ratio of isomers: *cis/trans* = 75/25) (from Mitsubishi Gas Chemical Co., Inc.) filled in a drip tank, into the materials in the reactor, was started while keeping inside of the reactor at 0.4 MPa, and the content was heated up to 295°C while removing the water released as a result of condensation out of the system. After completion of addition of 1,3-BAC, the inside of the reactor was gradually returned to normal pressure, and then evacuated using an aspirator down to 80 kPa to thereby remove water resulted from condensation. During evacuation, torque of the stirrer was monitored, stirring was stopped when a predetermined torque was reached, the inside of the reactor was pressurized with nitrogen gas, the bottom outlet valve was opened, and the polymer was drawn out through the strand die into strands, cooled, and then pelletized to obtain a polyamide resin. The thus obtained polyamide resin was named "1,3-BAC10I-1". The obtained polyamide resin was evaluated as follows. Results are summarized in Table 1.

<Measurement of Melt Viscosity>

Using a capilograph and a die of 1 mm diameter and 10 mm long, the melt viscosity of the polyamide resin was measured under conditions including an apparent shear rate of 122 $sec^{-1}$, a measurement temperature of 280°C, a retention time of 6 minutes, and a water content of sample of 1,000 ppm by mass. The capilograph used in this Example was a Capilograph D-1, from Toyo Seiki Seisaku-sho, Ltd.

<Measurement of Glass Transition Temperature (Tg)>

Using a differential scanning calorimeter (DSC), a sample was heated under a nitrogen gas flow at a heating rate of 10°C/min from room temperature up to 250°C, then immediately cooled down to room temperature or less, and again heated from room temperature up to 250°C at a heating rate of 10°C/min, during which the glass transition temperature was measured. The differential scanning calorimeter used in this Example was DSC-60 from Shimadzu Corporation.
Also crystal melting enthalpy $\Delta Hm$ (X) of the polyamide resin during heating was measured in accordance with JIS K7121.

<Number-Average Molecular Weight (Mn)>

Into a 4/1 (by volume) phenol/ethanol mixed solution, 0.3 g of the polyamide resin was allowed to dissolve at 20 to 30°C under stirring, and after thoroughly dissolved, the vessel wall was rinsed with 5 ml of methanol under stirring, and the solution was subjected to neutralization titration with a 0.01 mol/L aqueous hydrochloric acid solution, to determine the terminal amino group concentration. Meanwhile, 0.3 g of the polyamide resin was allowed to dissolve into benzyl alcohol under a nitrogen gas flow at 160 to 180°C under stirring, and after thoroughly dissolved, the solution was cooled under a nitrogen gas flow down to 80°C or less, the vessel wall was rinsed with 10 ml of methanol under stirring, and the solution and the rinsate were subjected to neutralization titration with a 0.01 mol/L aqueous sodium hydroxide solution, to determine the terminal carboxy group concentration [COOH]. Using the thus determined terminal amino group concentration [NH$_2$] and the terminal carboxy group concentration [COOH], the number-average molecular weight was calculated according to the equation below:

$$\text{Number-average molecular weight} = 2/([NH_2] + [COOH])$$

[NH$_2$]: terminal amino group concentration (equivalent/g)
[COOH]: terminal carboxy group concentration (equivalent/g)

<Measurement of Haze>

The thus obtained polyamide resin pellets were dried, extruded using a single screw extruder at a preset temperature of Tg + 150°C, to manufacture a plate of 2 mm thick. The haze value was determined based on the transmission method using a haze meter. The haze meter used in this Example was Model COH-300A, from Nippon Denshoku Industries Co., Ltd.

<Evaluation of Heat Aging Resistance>

The thus obtained polyamide resin pellets were dried *in vacuo* at 120°C (dew point - 40°C) for 24 hours, and extruded using an injection molding machine (SE130DU-HP, from Sumitomo Heavy Industries, Ltd.) at a die temperature of 100°C and a cylinder temperature of 280°C, to manufacture a 4 mm × 10 mm × 80 mm test specimen. The test specimen was heated in a hot air dryer (DF611, from Yamato Scientific Co., Ltd.) at an internal temperature of 120°C. The test specimen was taken out 30 days after, and the bending strength (MPa) was measured in accordance with ISO178, using an autograph (Bend-graph, from Toyo Seiki Seisaku-sho, Ltd.), in an environment of 23°C/50%RH, and the retention ratio (%) relative to the initial value was determined.

<Flexural Modulus and Bending Strength >

The thus obtained polyamide resin pellets were dried *in vacuo* at 120°C (dew point - 40°C) for 24 hours, and extruded using an injection molding machine (SE130DU-HP, from Sumitomo Heavy Industries, Ltd.) at a die temperature of 100°C, and a cylinder temperature of 280°C, to manufacture a 4 mm × 10 mm × 80 mm test specimen.
The flexural modulus (GPa) and the bending strength (MPa) were measured in accordance with ISO178, using an autograph (Bend-Graph, from Toyo Seiki Seisaku-sho, Ltd.) in an environment of 23°C/50%RH.

Example 2

<Synthesis of 1,3-BAC10I-2>

A polyamide resin was obtained in the same way as in Example 1, except that the molar ratio of sebacic acid and isophthalic acid was changed to 36:64. The thus obtained polyamide resin was named "1,3-BAC10I-2".

<Various Performances Evaluation>

The performances were evaluated in the same way as in Example 1, except that the polyamide resin was changed to 1,3-BAC10I-2.

Comparative Example 1

<Synthesis of 1,3-BAC6I>

A polyamide resin was obtained in the same way as in Example 1, except that an equimolar amount of adipic acid was used in place of sebacic acid. The thus obtained polyamide resin was named "1,3-BAC6I".

<Various Performances Evaluation>

The performances were evaluated in the same way as in Example 1, except that the polyamide resin was changed to 1,3-BAC6I.

Comparative Example 2

<Synthesis of 1,3-BAC10T>

A polyamide resin was obtained in the same way as in Example 1, except that an equimolar amount of terephthalic acid was used in place of isophthalic acid. The thus obtained polyamide resin was named "1,3-BAC10T".

<Various Performances Evaluation>

The performances were evaluated in the same way as in Example 1, except that the polyamide resin was changed to 1,3-BAC10T.
Results are summarized in Table below.

[Table 1]

|  |  |  | Example 1 | Example 2 | Comparative Example 1 | Comparative Example 2 |
|---|---|---|---|---|---|---|
| Polyamide Resin |  |  | 1,3-BAC10I-1 | 1,3-BAC10I-2 | 1,3-BAC6I | 1,3-BAC10T |
| Diamine | 1,3-BAC | mol% | 100 | 100 | 100 | 100 |

(continued)

| | | | Example 1 | Example 2 | Comparative Example 1 | Comparative Example 2 |
|---|---|---|---|---|---|---|
| Dicarboxylic acid | SA | mol% | 50 | 36 | | 50 |
| | AdA | mol% | | | 50 | |
| | PIA | mol% | 50 | 64 | 50 | |
| | PTA | mol% | | | | 50 |
| | | | | | | |
| Melt Viscosity | | Pa·s | 560 | 840 | 310 | 710 |
| Tg | | °C | 132 | 150 | 148 | 150 |
| Mn | | | 17,000 | 15,000 | 16,800 | 14,700 |
| Haze | | % | 1.9 | 2.7 | 5.6 | 4.6 |
| Heat Aging Resistance | | % | 100 | 100 | 77 | 82 |
| Flexural Modulus | | GPa | 2.90 | 3.09 | 3.59 | 2.93 |
| Flexural Strength | | MPa | 147 | 171 | 173 | 147 |

In Table above, 1,3-BAC stands for 1,3-bis(aminomethyl)cyclohexane, SA for sebacic acid, AdA for adipic acid, PIA for isophthalic acid, and PTA for terephthalic acid.

As is clear from the results, the polyamide resins of this invention were found to achieve high transparency (low haze) and high heat aging resistance. In contrast, the polyamide resin (Comparative Example 1), whose dicarboxylic acid-derived structural unit is composed of a straight chain aliphatic dicarboxylic acid having 7 or less carbon atoms and isophthalic acid, was found to achieve only low transparency and low heat aging resistance. The polyamide resin (Comparative Example 2), whose dicarboxylic acid-derived structural unit is composed of a straight chain aliphatic dicarboxylic acid having 8 to 12 carbon atoms and terephthalic acid, was again found to achieve only low transparency and low heat aging resistance.

The resins of Examples 1 and 2 were found to have a crystal melting enthalpy ΔHm of 0 J/g. That is, these resins were found to be amorphous.

The present inventors also reproduced the polyamide resin described in Example 1 of JP-A-2010-285553 and evaluated it in the same way as described above, only to find high haze, that is, low transparency.

The present inventors also reproduced the polyamide resin described in Exemplary Manufacture 1 of JP-A-2001-115017 and evaluated it in the same away as described above, again only to find low heat aging resistance.

**Claims**

1. A polyamide resin comprising a diamine-derived structural unit and a dicarboxylic acid-derived structural unit, the diamine-derived structural unit being such that 70 mol% or more thereof is derived from 1,3-bis(aminomethyl)cyclohexane, and the dicarboxylic acid-derived structural unit being such that 10 to 90 mol% thereof is derived from isophthalic acid, 90 to 10 mol% of thereof is derived from a straight chain aliphatic dicarboxylic acid having 8 to 12 carbon atoms, and the dicarboxylic acid-derived structural unit containing substantially no terephthalic acid-derived structural unit.

2. The polyamide resin of Claim 1, wherein the dicarboxylic acid-derived structural unit is such that 30 to 70 mol% thereof is derived from isophthalic acid, and 70 to 30 mol% thereof is derived from the straight chain aliphatic dicarboxylic acid having 8 to 12 carbon atoms.

3. The polyamide resin of Claim 1 or 2, wherein the straight chain aliphatic dicarboxylic acid having 8 to 12 carbon atoms is sebacic acid.

4. The polyamide resin of any one of Claims 1 to 3, wherein the polyamide resin has a melt viscosity, measured at a shear rate of 122 sec$^{-1}$, 280°C, and a retention time of 6 minutes, of 200 to 1,200 Pa· s.

5. The polyamide resin of any one of Claims 1 to 4, wherein the polyamide resin has a number-average molecular weight of 8,000 to 25,000.

6. The polyamide resin of any one of Claims 1 to 5, wherein the polyamide resin has a glass transition temperature of 100 to 190°C.

7. The polyamide resin of any one of Claims 1 to 6, wherein 1,3-bis(aminomethyl)cyclohexane that composes the diamine-derived structural unit has a molar ratio of *cis* isomer and *trans* isomer (*cis/trans*) of 100/0 to 50/50.

8. The polyamide resin of any one of Claims 1 to 7, being amorphous.

9. A molded article obtained by molding the polyamide resin described in any one of Claims 1 to 8.

**INTERNATIONAL SEARCH REPORT**

| International application No. |
| --- |
| PCT/JP2016/063270 |

A. CLASSIFICATION OF SUBJECT MATTER
*C08G69/26*(2006.01)i

According to International Patent Classification (IPC) or to both national classification and IPC

B. FIELDS SEARCHED

Minimum documentation searched (classification system followed by classification symbols)
C08G69, C08L77

Documentation searched other than minimum documentation to the extent that such documents are included in the fields searched
Jitsuyo Shinan Koho          1922-1996    Jitsuyo Shinan Toroku Koho    1996-2016
Kokai Jitsuyo Shinan Koho    1971-2016    Toroku Jitsuyo Shinan Koho    1994-2016

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
| --- | --- | --- |
| X<br>Y | US 2014/0127440 A1 (SOLVAY SPECIALITY POLYMERS), 08 May 2014 (08.05.2014), claims; E10; paragraphs [0018], [0053] & EP 2767555 A1          & EP 2727951 A1 & CN 103804902 A          & KR 10-2014-0058383 A | 1,3-6,8,9<br>7 |
| X<br>Y | WO 2011/132456 A1 (Mitsubishi Gas Chemical Co., Inc.), 27 October 2011 (27.10.2011), claims; paragraphs [0022], [0026], [0049]; tables 2-2, 4 & US 2013/0041128 A1 claims; paragraphs [0027], [0031], [0061] to [0064]; tables 2, 4 & EP 2562203 A1          & CN 102858848 A & MX 2012012144 A          & KR 10-2013-0075728 A | 1-9<br>7 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 July 2016 (01.07.16) | Date of mailing of the international search report<br>12 July 2016 (12.07.16) |
| --- | --- |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2016/063270 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2012/014772 A1 (Mitsubishi Gas Chemical Co., Inc.),<br>02 February 2012 (02.02.2012),<br>claims; paragraphs [0029], [0032], [0049] to [0051]<br>& US 2013/0066041 A1<br>claims; paragraphs [0031] to [0034], [0037], [0061] to [0063]<br>& EP 2554567 A1 & CN 102918080 A<br>& KR 10-2013-0018905 A & MX 2012013121 A | 7 |
| A | US 3012994 A (EASTMAN KODAK CO.),<br>12 December 1961 (12.12.1961),<br>claims; examples<br>& GB 922677 A & DE 1495556 A<br>& FR 1263476 A | 1-9 |
| A | JP 2010-285553 A (Mitsubishi Gas Chemical Co., Inc.),<br>24 December 2010 (24.12.2010),<br>claims<br>(Family: none) | 1-9 |
| A | JP 2001-115017 A (Mitsubishi Gas Chemical Co., Inc.),<br>24 April 2001 (24.04.2001),<br>claims<br>(Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010285553 A

- JP 2001115017 A